Europäisches Patentamt

European Patent Office

Office européen des brevets

(11) Publication number: **0 426 595 A2**

# EUROPEAN PATENT APPLICATION

(21) Application number: **90480141.2**

(22) Date of filing: **21.09.90**

(51) Int. Cl.⁵: **G06F 1/00**

(30) Priority: **02.11.89 US 430853**

(43) Date of publication of application:
**08.05.91 Bulletin 91/19**

(84) Designated Contracting States:
**DE FR GB**

(71) Applicant: **International Business Machines Corporation**
**Old Orchard Road**
**Armonk, N.Y. 10504(US)**

(72) Inventor: **Kasiraj, Chander**
**2133 Aspenwood**
**Grapevine,TX 76051(US)**
Inventor: **Taylor, James Lynn**
**211 Cherrybark Dr.**
**Coppell,TX 75019(US)**
Inventor: **Wolf, Timothy James**
**4917 Kundinger Court**
**Raleigh, NC 27606(US)**

(74) Representative: **Tubiana, Max**
**Compagnie IBM France Département de Propriété Intellectuelle**
**F-06610 La Gaude(FR)**

(54) Method of permitting access of shared resources using user set definition to support affinity and surrogate user relations.

㉗ This invention relates to a method of sharing a resource by surrogate users in a distributed environment. Surrogate users are identified to access mechanism within the distributed environment by entering them as members of a user set. The user set where a surrogate user is entered may contain other surrogate users or other user sets. When a surrogate user attempts to use the shared resource, the access mechanism identifies them by checking the user set and creates a user list containing key information and the level of access granted the surrogate user. The access mechanism produces a resolved listing of all surrogate users if the surrogate is entered into a user set having as a member another user set. The access mechanism will grant access to the resource based on the contents of the user list and the newly created user list.

# A METHOD OF PERMITTING ACCESS OF SHARED RESOURCES USING USER SET DEFINITION TO SUPPORT AFFINITY AND SURROGATE USER RELATIONS

Field of the Invention

The present invention relates to sharing resources in a distributed computing system, and more particularly, to a secured way of determining the access rights of individual users within a shared system environment.

Background of the Invention

Resource sharing is a common practice in distributed computing systems. Various degrees of access authorization are available which permit resource owners to limit access to a shared resource. In office environments, resource sharing is done using affinity and surrogate relationships.

An affinity relationship exists if the owner of a resource permits a level of access to an asset. In an affinity relationship, the owner authorizes another user to act on behalf of the owner. The user given access by the owner of the resource is therefore allowed to do certain work on behalf of the owner with both the user and the owner maintaining their separate identities.

In contrast, a surrogate relationship is established when a user substitutes for the owner of a shared resource. In such a case, for all practical and legal purposes, the owner of the resource cannot be distinguished from the substitute. The effects of surrogacy are clearly illustrated when the owner of a resource provides a password for accessing a shared resource to another user. It becomes impossible to tell, by examining the system con taining the resource, whether the owner or authorized user (surrogate) accessed the resource.

Most office environments support surrogate relationships via an authorization key called a password. As previously explained, the password owner may give the password to another user who may log-on or access information as if it was the password owner. This type of surrogate support is commonly practiced with the use of temporary personnel by an enterprise. When temporary personnel is hired, a generic userid, for example "secretary", is assigned along with a password. When the temporary personnel accesses information as "secretary" with the password, they become a surrogate for "secretary". When one temporary personnel is replaced with another, a new password may be assigned (but not always) and the new hire becomes the new surrogate of "secretary".

This practice has several disadvantages. First, it limits the number of surrogates that can act on-behalf of "secretary". Note that the owner of a userid is typically limited to a single password. Therefore, at any one time, only a single user can access the resource.

Second, by passing a password from one user to another, the security of the resource is exposed. It is difficult, if not impossible, to limit further divulgence of the password beyond the surrogates.

Third, the temporary personnel is "unenrolled" in the system. This means that the level of access to the resource cannot be limited based on who is the surrogate for "secretary". Therefore, temporary personnel, with possession of the owner's password, could access any part of the resource that the resource owner could. This is not considered desirable in many shared resource systems which require some means for limiting access.

Finally, the system would be unable to maintain an audit path for the surrogate user. It is desirable to have some means for determining the person(s) accessing the resource as well as the time and manner in which the resource was accessed.

Summary of the Invention

This invention relates to a method of accessing a shared resource by multiple users including surrogate users. Users of the shared resource are divided into two classes. Surrogate users are assigned to a class called a user set. All other users are assigned as a class of simple users. Surrogate users may be members of a user set consisting of other surrogate users, or they may have another user set as a member. Any user accessing the shared resource will be queried to determine into which class of users they are assigned. After determining the proper class, a user list will be created. The user list contains key information and the level of access granted the user. When a user is found to be a member of a user set which contains other user sets as members, a resolved listing of members will be generated. This resolved listing represents all surrogate users who are members of the user set. Access will then be granted to the surrogate user based on key information, the level of access indicated in the user list, and the resolved listing.

Brief Description of the Drawings

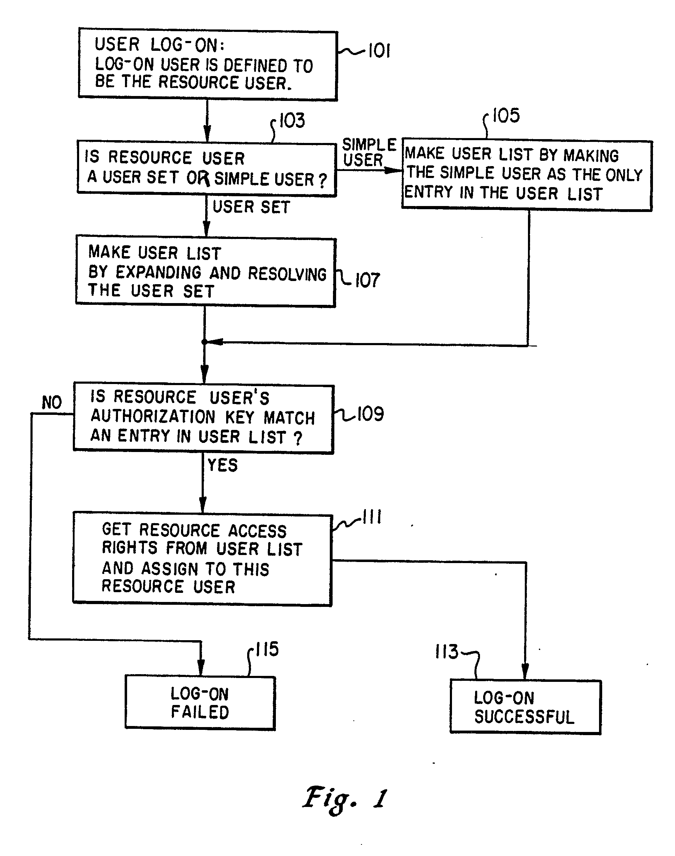

Fig. 1 is a block diagram representation of the steps required to allow sharing of a resource according to the invention.

Detailed Description of the Embodiments

The invention provides a method of permitting access of shared resources by one user to another in a distributed environment. In an office environment, resource sharing is done using affinity and surrogate relationships.

Affinity relationships exist when one user permits a level of access to a resource to another user. The user granted access to the resource is "authorized" to act on-behalf of the user permitting the access. If user A has affinity with user B, then user B is authorized to do certain work on-behalf of user A. In affinity relationships, user A and user B maintain their own identity. In addition, affinity is a non-transitive relationship. Therefore, if user A has affinity with user B, and user B has affinity with user C, then user A does not necessarily have affinity with user C.

On the other hand, most office environments support surrogate relationships by use of an authorization key called a password. A surrogate relationship exists when there is a substitute relation of one user by another. To accomplish the substitution, user A the password owner, gives the password to user B who then logs-on or accesses the resource as user A. A typical example occurs when a secretary, using the password of a principal, accesses information as if the principal was actually utilizing the resource.

Another common example of surrogacy occurs when an enterprise uses temporary personnel. Temporary personnel is permitted access to a shared resource by assigning a generic userid along with a password. The generic userid defines the surrogate relationship. For example, if temporary personnel was assigned the generic userid "TEMPERSON" and a password, access to a resource could be gained. When one temporary personnel is replaced by another hired, the new hire would again be assigned the generic userid "TEMPERSON" and perhaps a new password. The new hire thus becomes the new surrogate of "TEMPERSON". What has occurred is a substitute authorization of one user by another user where the surrogate user has assumed the identity of the user for whom the substitution is required; in this example, "TEMPERSON".

While both affinity and surrogate relationships permit resource access rights to a resource, the two relationships are separate and should not be confused. Each relation has different degrees of access to a resource when defined.

However, the two relations may be freely mixed. For example, the following relationship is possible when there is mixing of the affinity and surrogate relationships. The symbol " => " will be used to denote affinity relationships and the symbol " = " will denote a surrogate relationship.

If (user A = user B) user A is surrogate of user B

If (user B => user C) user B has affinity with user C

Then (user A => user C) user A, as a surrogate of user B, has affinity with user C

This invention relies on the concepts of a simple user, a resource user, a user set, and a user list. A simple user is an individual user of a shared resource. A resource user is the user seeking access to the shared resource and can be a simple user or a user set. A user set contains one or more simple users or one or more user sets. A user set may contain several levels of nesting of other user sets. However, there is a restriction that the user set cannot be cyclical. A user set is cyclical when it is a member of itself. Finally, a user list specifies the resolved list of simple users in a user set. The resolved list results when all levels of nesting and user sets are expanded to produce a single listing of users.

This invention aids in preventing security exposures while providing a method where the system can audit surrogate users. More importantly, system control is maintained to limit certain levels of surrogate authorization. The following example will more clearly illuminate the breath of the invention.

A user set "B" will be defined having as elements, user C and D. Brackets "[]" will be used to denote simple users and braces "{ }" will denote user sets.

If ([user A] => {user B} => [user E]) and
({user B} contains ([user C] & [user D]))
then ({user B}=[user C]) & {[user B}=[user D])
but [user C] not = [user D]
then [user A] => [user C] => [user E]
then [user A] => [user D] => [user E]

Note that the user set {user B} in the above example contains elements [user C] and [user D]. The user set defines multiple surrogates since it contains at least two elements. It should be noted that the elements in {user B} can be further assigned various levels of access authorization. For example, [user C] may be given authorization to view but not update and [user D] may be given update authority. The surrogates, [user C] and [user D] are enrolled as resource users in the system. As resource users, each may log-on to the system to perform a set of operations and functions provided by the system.

The surrogate for {user B} is dynamic such that elements in {user B} can be added, updated, and deleted. Since {user BJ}can contain other user sets, the invention supports transitive surrogate relationships.

Therefore, the invention aids in preventing security exposures and provides the system a way to audit the surrogate users. In addition, the system can control or limit certain levels of surrogate authorization.

With reference to figure 1, there is shown a block diagram representation of steps a user performs to access a shared resource using this invention. A user defined as a resource user logs-on to the system, 101. The system queries the resource user to determine which of two classes the user belongs, 103. If the system determines that the resource user is a simple user, it requires the creation of a user list, 105. The simple user is made the only entry in the user list. After the user list is created, the method requires a determination of whether the resource user's authorization key matches an entry in the user list, 109. This is equivalent to the checking of a user's password. If the authorization key is an entry in the user list, the level of access granted this user is ascertained, 111. The resource access rights granted a particular user is made from the user list. The access rights are determined and a successful log-on will be indicated, 113.

If the resource user is not found to be a simple user, but a member of a user set, resolution of the user set is required, 107. A user list is created by expanding and resolving the user set, 107. Following the expansion and resolution of the user set to create the user list, the authorization key match operation is commenced. If the resource user's authorization key is not in the user list, the log-on operation will fail, 115.

On the other hand, if the authorization key is found in the user list, the resource access rights are found and assigned to the user, 111. The system will then indicate successful log-on, 113.

In summary, resource users enrolled on a system and assigned a set of resources, logs onto the system to perform operations and functions. The system categorizes the resource users into two types of users, simple users and user sets. Simple users are individual end users, and user sets define a set of simple users or other user sets. The user sets may be used to define multiple surrogate users by defining two or more elements within the user sets. Various levels of access authorization may be assigned to each element which represents a surrogate within the user set. Each surrogate user is enrolled on the system as a resource user thereby preventing security exposures and permitting auditing of the surrogate users. Surrogate users defined by this invention are dynamic, because elements within the user sets defining such users, can be added, updated, and deleted. Transitive surrogate relationships are provided by this invention because the user sets may contain other user sets.

While the invention has been described with respect to a preferred embodiment thereof, it will be understood by those skilled in the art that various changes in detail may be made therein without departing from the spirit, scope, and teaching of the invention. Accordingly, the herein disclosed invention is to be limited only as specified in the following claims.

## Claims

1. A method of determining access rights to a shared resource by a plurality of individual users within a shared system environment, said plurality of individual users including surrogate users, comprising the steps of:
categorizing said plurality of individual users into groups of simple users and user groups;
assigning said surrogate users to said user groups and defining levels of surrogate authorization for each of said surrogate users within said user groups.

2. A method of allowing an owner to grant varying degrees of access to a shared resource to a plurality of users while maintaining the separate identities of said owner and users, comprising the steps of:
classifying users into classes having simple users and user groups;
creating a user list based on said classes having an authorization key and user access level;
determining an authorization key match from said user list; and granting access to said shared resource based on said authorization key match and user access level in said user list.

3. A method of accessing a shared resource by a plurality of surrogate users in a system having affinity and surrogate relationships, said system maintaining the separate identities of said plurality of surrogate users, comprising the steps of:
defining a user set of surrogate users and a separate class of simple users;
creating a user list having an authorization key and level of access for each of said surrogate users and simple users; and
granting access to said shared resource based on said level of access and authorization key.

4. The method as recited in claim 3 wherein said defining step includes the step of:
resolving said user set only when a user is a

surrogate user.

USER LOG-ON:
LOG-ON USER IS DEFINED TO
BE THE RESOURCE USER. — 101

IS RESOURCE USER
A USER SET OR SIMPLE USER? — 103

SIMPLE USER → MAKE USER LIST BY MAKING
THE SIMPLE USER AS THE ONLY
ENTRY IN THE USER LIST — 105

USER SET

MAKE USER LIST
BY EXPANDING AND RESOLVING
THE USER SET — 107

IS RESOURCE USER'S
AUTHORIZATION KEY MATCH
AN ENTRY IN USER LIST? — 109

NO

YES

GET RESOURCE ACCESS
RIGHTS FROM USER LIST
AND ASSIGN TO THIS
RESOURCE USER — 111

LOG-ON
FAILED — 115

LOG-ON
SUCCESSFUL — 113

*Fig. 1*